# DEMANDE DE BREVET EUROPEEN

(11) **EP 1 992 813 A1**
(43) Date de publication de la demande: **19.11.2008**
(21) Numéro de dépôt: 08155059.2
(22) Date de dépôt: 23.04.2008
(51) Int. Cl.: F02M 61/14, F02M 63/02

(54) **Système permettant une adaptation du dépassement de l'injecteur dans la chambre de combustion d'un moteur diesel**

(30) Priorité: 14.05.2007 FR 0755043
(71) Demandeur: PEUGEOT CITROËN AUTOMOBILES SA, 78140 Vélizy Villacoublay (FR)
(72) Inventeur: Chemisky, Jean-Pierre, 92400 Courbevoie (FR); Lutz, Patrick, 78800 Houilles (FR); Gimbres, David, 94510 La Queue en Brie (FR)
(74) Mandataire: Ménès, Catherine

(57) **Abrégé**

L'invention a pour objet un système d'adaptation du dépassement d'un injecteur (1) de carburait dans une chambre de combustion (3) d'un moteur à combustion interne selon les conditions de fonctionnement du moteur, l'injecteur (1) étant disposé dans un logement de la culasse comportant un plan d'appui (41) pour l'injecteur (1). Selon l'invention, ce système est caractérisé en ce qu'il comprend des moyens de positionnement placés entre l'injecteur (1) et le plan d'appui (41), reliés au moyen d'amenée (5) de carburant et tels que les moyens de déplacement font varier le dépassement NTP de l'injecteur.

L'invention a également pour objet un moteur comportant un tel système d'adaptation et un procédé de commande d'un tel moteur.

## Description

La présente invention concerne un système permettant d'adapter le dépassement d'un injecteur de carburant dans une chambre de combustion d'un moteur à combustion interne aux conditions de fonctionnement du moteur. L'invention concerne également un moteur à combustion interne comportant un tel système et un procédé de commande d'un tel moteur.

Dans un moteur à combustion interne et plus particulièrement sur une culasse d'un moteur à combustion interne, un trou de passage est conformé spécifiquement pour la ou chacune des chambres de combustion, pour y loger un injecteur de carburant. Le trou de passage, ou chacun des trous de passage, du moteur à combustion interne comporte un plan d'appui pour l'injecteur, l'injecteur ou les injecteurs étant en outre coincés par un moyen d'amenée de carburant. Pour obtenir une répartition optimale du carburant dans la chambre de combustion, chacun des injecteurs dépasse dans la chambre de combustion d'une valeur prédéterminée selon la géométrie de la chambre de combustion et selon la répartition du carburant que l'on souhaite obtenir dans la chambre de combustion, donc déterminée pour obtenir un mélange air/carburant et une combustion optimales.

Le dépassement de l'injecteur dans la chambre de combustion joue un rôle majeur dans la qualité de la combustion et dans l'utilisation de l'air à disposition par le carburant. Il apparaît, sur les moteurs modernes, que le dépassement optimal de l'injecteur est plus important sur les points de charge partielle que sur les points de pleine charge.

Des normes anti-pollution de plus en plus strictes, mais également le souhait d'augmenter les puissances spécifiques des moteurs à combustion interne imposent de maîtriser au mieux les processus de combustion et de les adapter de plus en plus finement aux conditions de fonctionnement du moteur.

C'est pour cette raison, que chaque développement d'un nouveau moteur ou chaque modification des chambres de combustion d'un moteur existant impose à nouveau une étude complète du positionnement optimal des injecteurs dans chacune des chambres de combustion, tout comme elle impose d'étudier de façon complète les moments optimaux d'injection dans chaque cycle de combustion.

Par ailleurs, lorsque le moteur est équipé d'un filtre à particules, pendant les phases de régénération de ce filtre, les injections sont réalisées de façon relativement tardive. Cette façon de faire entraîne un phénomène de dilution du carburant dans l'huile, ce qui est dû à l'impact du carburant sur les parois du cylindre.

En pratique, le concepteur d'un système de combustion va donc opérer une série de choix architecturaux, notamment en ce qui concerne le positionnement des injecteurs, qui mènent à ce qu'il considère comme le meilleur compromis notamment entre la puissance spécifique maximale du moteur et la réduction des émissions polluantes pour l'ensemble des régimes auxquels le moteur devra fonctionner.

Pour autant, il serait donc souhaitable de ne pas « figer » l'ensemble de ces choix architecturaux, en particulier en permettant de modifier légèrement la position des injecteurs dans la chambre de combustion en fonction des conditions de fonctionnement du moteur.

Quelques propositions d'injecteurs mobiles ont ainsi déjà été formulées. Ainsi, on connaît de FR 2861813 un injecteur de carburant monté déplaçable par rapport au cylindre dans lequel il injecte du carburant. Pour ce faire, l'injecteur est fixé rigidement à un plateau qui ferme une chambre dans laquelle est amené un fluide autre que le carburant injecté, à l'exemple d'une huile, Lorsque la pression dans la chambre s'élève, le plateau est déplacé ce qui provoque une augmentation du dépassement de l'injecteur dans le cylindre. Un ressort ou une chambre opposée exerce une force de rappel. Dans ce document il est indiqué que le déplacement de l'injecteur peut être asservi au régime moteur (avec un dépassement maximal à haut régime) ou à la position du piston (pour un dépassement minimal au niveau du point mort haut) mais il n'est pas précisé comment cet asservissement peut effectivement être obtenu.

On connaît par ailleurs du brevet US 5 718 205 un dispositif de positionnement d'un injecteur de carburant constitué par une crémaillère qui engrène sur un pignon entrainé par un levier solidaire de la pédale d'accélération. Ce dispositif demande une modification relativement importante du moteur et des tolérances de fabrication des pièces mécaniques très faibles pour obtenir des déplacements dont l'ordre de grandeur n'est le plus souvent que de quelques dixièmes de millimètres.

Le besoin d'un système à la fois relativement d'une conception relativement simplifiée et permettant de commander directement la position de l'injecteur n'est donc pas satisfait par ces solutions connues de l'art.

C'est pourquoi l'invention propose un système d'adaptation du dépassement d'un injecteur de carburant dans une chambre de combustion d'un moteur à combustion interne selon les conditions de fonctionnement du moteur, l'injecteur étant disposé dans un logement de la culasse comportant un plan d'appui pour l'injecteur. Ce système d'adaptation de l'injecteur est remarquable en ce qu'il comprend des moyens de positionnement placés entre l'injecteur et le plan d'appui, reliés au moyen d'amenée de carburant et tels que les moyens de déplacement font varier le dépassement NTP de l'injecteur en réponse à une variation instantanée de la pression dans les moyens d'amenée (par exemple une rampe commune).

Le système d'adaptation du dépassement d'un injecteur trouve avantageusement une application pour les moteurs dits Diesel, en particulier ceux de ces moteurs dont le moyen d'amenée du carburant dit haute pression, par exemple qui comporte une rampe commune et/ou qui par ailleurs sont associés à des moyens de dépollution incorporant notamment un filtre à particules.

De façon préférée, la position de référence de l'injecteur, c'est-à-dire la position juste après montage correspond à un dépassement optimisé pour un moteur tournant au ralenti, suite à un démarrage à froid, ou en d'autres termes à la position la plus « basse » (plus grand dépassement), de l'injecteur. Dans un tel cas, le système d'adaptation du dépassement d'un injecteur est uniquement conformé pour réduire le dépassement de l'injecteur pendant le fonctionnement du moteur à partir d'un dépassement initial.

Toutefois, sans sortir du cadre de l'invention, il est parfaitement possible de concevoir un système inverse (avec un système conformé pour agrandir le dépassement de l'injecteur) ou tout système intermédiaire avec un point de référence correspondant par exemple à des conditions de roulage en charge moyenne (propres par exemple à maintenir une vitesse constante de 100km/h pour un véhicule non chargé roulant sur du plat).

Selon un premier mode de réalisation, correspondant plus particulièrement au mode dans lequel le réglage du dépassement consiste à réduire plus ou moins celui-ci par rapport à la position de référence, l'injecteur est déplace au moyen d'au moins un poussoir qui assure un déplacement axial de l'injecteur, poussoir lui-même actionné par un piston hydraulique transmettant les variations de pression dans le moyen d'amenée du carburant.

Selon un second mode de réalisation, le déplacement du piston peut être commandé par des moyens électromagnétiques, capables d'agir aussi bien dans le sens d'une augmentation du dépassement que dans le sens d'une diminution du dépassement, associés avec des moyens propres à détecter des variations de pression dans les moyens d'amenée du carburant et des moyens pour transformer les variations de pression détectées en signaux électriques, comme par exemple un capteur piézoélectrique, utilisés pour commandés les moyens électromagnétiques. Plus complexe que la solution précédente, et pour cette raison généralement non préférée, cette solution a néanmoins l'avantage qu'une partie des moyens nécessaires à sa mise en oeuvre sont le plus souvent déjà prévus sur les moteurs modernes (comme par exemple un capteur de pression présent dans la rampe commune) et qu'il convient par ailleurs de souligner que les différences entre un dépassement minimal et un dépassement maximal de l'injecteur sont de l'ordre que quelques dixièmes de millimètres, c'est-à-dire parfaitement dimensionnés pour des commandes électromagnétiques.

Lorsque le premier mode de réalisation est utilisé, l'énergie nécessaire à la mise sous pression du système hydraulique provient de la pression présente dans le moyen d'amenée du carburant (ou dans le rail haute pression alimentant lui-même ce moyen d'amenée du carburant). Cette énergie est obtenue par l'intermédiaire d'un piston opportunément dimensionné entre un tube haute pression du moyen d'amenée de carburant et le circuit hydraulique des poussoirs.

Dans un tel cas, le système peut être considéré comme autorégulé car généralement parlant, les zones de fonctionnement d'un moteur pour lesquelles le dépassement de l'injecteur doit être petit, sont celles pour lesquelles la pression dans le moyen d'amenée de carburant est élevée. Et les zones de fonctionnement pour lesquelles le dépassement de l'injecteur doit être important, sont calibrées avec une pression plus faible dans le moyen d'amenée de carburant.

En ce qui concerne la pression du circuit hydraulique des poussoirs hydrauliques, il convient de retenir que cette pression doit être importante, car l'ensemble du système définissant la position de l'injecteur à un moment donné doit être capable de maintenir l'injecteur immobile au cours d'un cycle entier de moteur, c'est-à-dire lorsque la pression dans la chambre de combustion, qui agit d'ailleurs sur le nez de l'injecteur, varie entre 1 et 200 bars absolus.

Le fait de prévoir des moyens d'adaptation destines à être placés entre l'injecteur et le plan d'appui de tout le passage dans lequel l'injecteur est logé, a pour conséquence que l'injecteur peut devenir sensible aux variations de pression dans la chambre de combustion. Il est donc avantageux de prévoir des moyens d'équilibrage pour compenser les effets des variations de pression de la chambre de combustion sur le dépassement de l'injecteur et éviter ainsi un déplacement de l'injecteur dans des cycles de compression et de détente. Ces moyens d'équilibrage doivent malgré tout autoriser un déplacement de l'injecteur lorsque ce dernier est commandé par le circuit hydraulique du système d'adaptation.

Pour ce faire, il y a plusieurs possibilités évoquées à titre d'exemples non limitatifs.

Une première possibilité consiste à utiliser un système de type ressort, avec un système de blocage du mouvement lorsque le cylindre est en compression. On peut alors utiliser un signal approprié de l'une des centrales de commande du moteur pour déterminer si le cylindre est en phase de compression détente ou en phase d'échange des gaz, donc à pression faible.

Une deuxième possibilité consiste à utiliser un système associant un ressort et un piston hydraulique avec un système de valve permettant de définir une pression de précontrainte en dessous de laquelle tout mouvement est interdit. Il suffit ensuite de dimensionner cette pression de façon à interdire tout mouvement de l'injecteur pour une pression intérieure à la pression maximale susceptible d'être atteinte dans le cylindre et de dimensionner le circuit hydraulique pour que la pression de commande soit significativement supérieure à cette pression limite.

Selon une autre caractéristique supplémentaire de l'invention, le système d'adaptation proposé par la présente invention comprend de plus des moyens pour filtrer les ondes de pression dans le moyen d'amenée du carburant causées par les injections, et éviter ainsi de déplacer l'injecteur à la fin des phases d'injection.

Pour ce faire, le système de transmission de la pression vers le piston hydraulique est par exemple dimensionné de façon à assurer une réduction de pression ou juste nécessaire pour Compatible avec d'autres éléments du système, en particulier avec le système assurant la compensation des efforts de pression de la chambre de combustion.

Inversement, il n'est pas souhaitable que le système d'adaptation du dépassement de l'injecteur perturbe l'injection. Un système de type « anti-retour » par exemple constitué par des clapets à tiroir permettant de bloquer le mouvement des poussoirs hydrauliques et donc de l'injecteur pendant les phases de combustion afin de limiter la complexité du système.

D'autres caractéristiques et avantages de la présente invention de la description ci-après d'un mode de réalisation de l'invention. La description est faite en référence aux dessins dans lesquels :
- la figure 1 représente schématiquement les éléments du système de l'invention,
- les figures 2 et 3 représentent schématiquement deux positions de dépassement d'un injecteur dans une chambre de combustion et
- la figure 4 représente un diagramme illustrant différentes zones de réglage du dépassement de l'injecteur en fonction des points de fonctionnement d'un moteur.

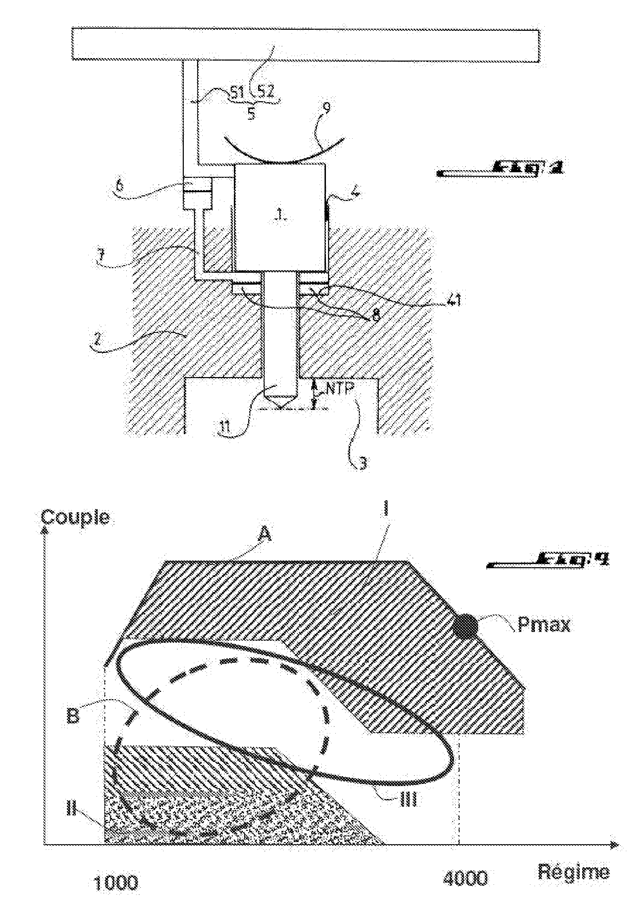

Le système d'adaptation que la présente invention propose et qui est représenté très schématiquement sur la figure 1, s'applique à un moteur à combustion interne ayant au moins un injecteur 1 de carburant, l'injecteur est disposé dans un logement 4 de la culasse 2 du moteur à combustion interne. Pour l'essentiel, l'injecteur est ainsi placé dans l'épaisseur de la culasse, avec seulement un dépassement dans la chambre de combustion 3de l'extrémité de l'injecteur côté de sa sortie de buse 11, sur une hauteur NTP.

Le logement 4 comporte un plan d'appui 41 sur lequel l'injecteur 1 prend directement appui lorsque la présente invention n'est pas mise en oeuvre. L'injecteur 1 est par ailleurs coiffé d'un moyen d'amenée 5 de carburant comportant un tube à haute pression de carburant 51 pour le ou chacun des injecteurs du moteur, ainsi qu'un rail 52 à haute pression alimentant le ou chacun des tubes 51.

Lorsque la présente invention est mise en oeuvre, le système d'adaptation de la présente invention comprend des moyens d'adaptation 8 placés entre l'injecteur 1 et le plan d'appui 41 du trou de passage 4. Les moyens d'adaptation 8 sont reliés au moyen d'amenée 5 de carburant duquel les moyens d'adaptation 8 reçoivent l'énergie nécessaire à leur fonctionnement. La liaison entre le moyen d'amenée 5 du carburant et les moyens d'adaptation 8 est établie par un piston hydraulique 7 qui est lui-même relié au moyen d'amenée 5 de carburant par des moyens de transmission de la pression 6.

Dans cette variante de réalisation de l'invention, le système de l'invention est basé sur l'utilisation d'un système hydraulique de type «poussoir hydraulique» qui permet de déplacer l'injecteur axialement, la pression du carburant dans le moyen d'amenée 5 étant utilisée pour fournir l'énergie nécessaire à l'obtention d'un dépassement axial de l'injecteur 1. Les moyens de transmission 6 sont conformés pour assurer une transmission des efforts de pression d'un tube haute pression 51 faisant partie du moyen d'amenée 5 de carburant, vers le piston hydraulique 7. Ainsi, tout changement de la pression du carburant, qui est considéré comme représentative des conditions de fonctionnement du moteur à combustion interne, octroie à l'injecteur 1 un mouvement axial dans le sens d'un éloignement de l'injecteur 1 de la phase d'appui 41 du trou de passage 4. Autrement dit, chaque augmentation de la pression dans le moyen d'amenée 5 de carburant a pour effet que l'injecteur 1 s'éloigne du plan d'appui 41 du trou de passage 4. Et lorsque la pression décroît, individuellement injecteur par injecteur ou pour l'ensemble des injecteurs, les injecteurs retournent à leur position de dépassement initial.

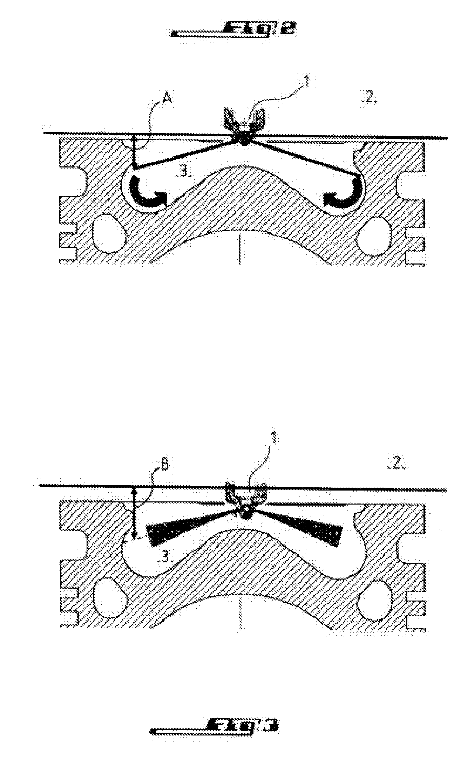

La figure 2 représente, sous la forme d'une coupe axiale, une chambre de combustion 3 d'un moteur thermique avec un injecteur 1 en cours d'injection. L'injecteur 1 est ici représenté dans une position à faible dépassement NTP dans la chambre de combustion, cas optimal en cas de pleine charge, donc essentiellement lorsque la puissance est maximale.

En effet, dans ces conditions de fonctionnement, l'injection de carburant se fait globalement autour du point mort haut du piston, donc lorsque le piston est au plus haut dans le cylindre, ce qui correspond au plus petit espacement entre le piston et la culasse, et donc à une compression maximale de l'air contenu dans la chambre de combustion. L'injection est relativement longue et produit un impact A du jet de carburant sur la paroi du cylindre. L'air est utilisé en exploitant le mouvement imprimé par la forme du creux du piston (le bol) au jet. Ce mouvement est indiqué sur la figure 2 par les deux flèches courbes ramenant le mélange air/carburant vers le centre du bol. L'exploitation de la forme du bol par le jet est d'autant plus importante que sur ce type de point de fonctionnement, la pression du carburant dans le rail 52 est élevée, et donc la dynamique de spray est importante.

La figure 3 représente, comme sur la figure 2 en une coupe axiale, la chambre de combustion 3 et l'injecteur 1 en cours d'injection, sauf que cette fois-ci le dépassement NTP de l'injecteur 1 est important, puisque le moteur fonctionne à charge partielle. En effet, le dépassement optimal de l'injecteur 1 pour des points de fonctionnement de faible charge se révèle être plus important que la valeur utilisée en pleine charge.

Ceci s'explique par la synthèse des éléments suivants. Les injections sont globalement effectuées après le point mort haut dans le cycle moteur, donc lorsque le piston a déjà commencé à redescendre, afin d'obtenir dans les gaz d'échappement un bon compromis entre la teneur en oxydes d'azote (NOx) et la teneur en particules, Ces injections sous-calées (après le point mort haut) sont d'autant plus utilisées que l'objectif de limiter les NOx à la source est sévère.

Dans certains cas, il est opéré une seconde injection, placée plus en aval dans le cycle moteur, donc lorsque le piston a commencé à descendre d'une façon significative. Cette seconde injection permet d'améliorer le compromis NOx/particules et est utilisée de préférence dans la zone de fonctionnement du champ moteur concernée par les cycles d'homologation pour les normes anti-pollution.

Il est aussi possible d'utiliser une pression de carburant plus faible dans le rail 52 lorsque le moteur fonctionne sur des points de fonctionnement de charge partielle. Ceci se fait en général pour des raisons de limitation du bruit de combustion. En tout cas, la pression réduite fait que l'aspect dynamique du jet est moins prépondérant dans l'utilisation de l'air que l'utilisation volumique de l'espace disponible dans le bol du piston.

La figure 3 montre que la distance entre le piston et la culasse est plus importante pendant une injection sous-calée qu'en pleine charge, que le dépassement NTP optimal est donc plus important. Elle montre aussi que, dans ce cas, l'impact optimal B du jet de carburant sur la paroi du cylindre est plus important que l'impact A en pleine charge.

Dans les moteurs à gasoil, le dépassement optimal de l'injecteur 1 dans une chambre de combustion 3 est le plus important lors des phases de régénération d'un filtre à particules. Toutefois, ce dépassement doit être compatible avec la contrainte de ne pas avoir d'impact entre le piston et l'injecteur.

Pour ce type de fonctionnement, on peut ménager un clapet dans le système de commande de la pression dans le système hydraulique, qui permet d'augmenter au maximum le dépassement de l'injecteur dans la chambre de combustion, quelle que soit la pression utilisée dans le rail 52.

La figure 4 représente différentes zones de fonctionnement d'un moteur thermique, caractérisées par le couple (représentatif de la charge) et le régime moteur. La courbe A est la courbe dite de pleine charge, le point Pmax le point de puissance maximale du moteur. La zone B correspond à la zone du champ moteur qui est utilisée sur les cycles d'homologation visant à vérifier la conformité avec les normes d'antipollution.

Selon l'invention, lorsque le moteur fonctionne « à pleine charge », c'est-à-dire avec un point de fonctionnement proche de la courbe de pleine charge, ce qui correspond à la zone hachurée I, le dépassement de l'injecteur est minimal. A l'inverse, pour les faibles charges, illustrées par la zone II, hachurée en sens inverse et à laquelle il faut également rattacher le ralenti, le dépassement de l'injecteur est de préférence maximal, et dans le cas de l'exemple de réalisation proposé à la figure 1, sera donc typiquement identique à la position de référence, position juste après le montage de l'injecteur.

Pour les charges intermédiaires, globalement définies par la zone III, des positions intermédiaires du dépassement de l'injecteur sont souhaitées.

A noter que lorsque le moteur est monte sur un véhicule muni d'un filtre qui doit être régénéré périodiquement à l'exemple d'un filtre à particules, lors des phases de régénération, il est avantageux que l'injecteur soit dans une position basse, donc dans la position analogue à la position pour les points de fonctionnement à bas régime, ce qui peut apparaître comme paradoxal sachant que lors de ces régénérations, des mesures sont typiquement prises pour augmenter la charge moteur.

Toutefois, il faut également tenir compte du fait que pendant ces phases de fonctionnement très particulières du moteur, pendant lesquelles on cherche à avoir de fortes températures à l'échappement, il est commun de procéder à des injections très fortement sous-calées. Ceci peut entraîner des problèmes de dilution du gasoil ayant impacté les parois du cylindre dans l'huile, ce qui peut limiter l'intervalle de maintenance du moteur. En augmentant au maximum la profondeur de l'injecteur dans la chambre de combustion, on peut donc augmenter la part de carburant recueillie dans le bol pour des injections effectuées très tard dans le cycle. Bien évidemment ceci n'est possible que si le dispositif d'adaptation du dépassement de permet de positionner l'injecteur en position basse même lorsque la pression dans le moyen d'amenée du carburant est élevée, autrement dit s'il existe un moyen du type clapet comme indiqué précédemment pour en quelque sorte débrayer le système d'adaptation en cas de besoin (la position de référence étant la position avec un dépassement au maximum.

## Revendications

1. Système d'adaptation du dépassement d'un injecteur (1) de carburant dans une chambre de combustion (3) d'un moteur à combustion interne selon les conditions de fonctionnement du moteur, l'injecteur (1) étant disposé dans un logement de la culasse comportant un plan d'appui (41) pour l'injecteur (1), **caractérisé en ce qu'**il comprend des moyens de positionnement placés entre l'injecteur (1) et le plan d'appui (41), reliés au moyen d'amenée (5) de carburant et tels que les moyens de déplacement font varier le dépassement NTP de l'injecteur en réponse à une variation instantanée de la pression dans le moyen d'amenée.

2. Système selon la revendication 1, **caractérisé en ce que** les moyens de déplacement (8) comprennent un piston hydraulique transmettant les variations de pression dans le moyen d'amenée du carburant à au moins un poussoir assurant un déplacement axial de l'injecteur (1).

3. Système selon la revendication 1 ou la revendication 2, **caractérisé en ce qu'**il comporte des moyens pour transmettre au piston hydraulique les variations de pression dans le moyen d'amenée tout en filtrant les ondes de pression dans le moyen d'amenée du carburant causées par les injections,

4. Système selon l'une quelconque des revendications 1 à 3, **caractérisé en ce qu'**il comporte des moyens anti-retour pour supprimer ou limiter la propagation vers les moyens d'amenée du carburant des variations de pression dans la chambre de combustion dues au cycle de combustion.

5. Système selon la revendication 4, **caractérisé en ce que** lesdits moyens anti-retour sont constitués par des clapets à tiroir.

6. Système selon l'une quelconque des revendications 1 à 5, **caractérisé en ce qu'**il comporte des moyens d'équilibrage pour compenser les effets des variations de pression de la chambre de combustion sur le dépassement de l'injecteur.

7. Système selon la revendication 6, **caractérisé en ce que** lesdits moyens d'équilibrage sont conformés pour une pression de travail supérieure à la pression de combustion maximale susceptible de se produire dans la chambre de combustion (3).

8. Système selon l'une quelconque des revendications précédentes, **caractérisé en ce qu'**il comporte de plus des moyens électromécaniques pour déplacer l'injecteur indépendamment des variations de pression dans le moyen d'amenée du carburant.

9. Système selon l'une des revendications 1, 2 ou 8, **caractérisé en ce qu'**il comporte des moyens pour mesurer les variations de pression dans le moyen d'amenée du carburant, des moyens pour produire un signal caractéristique des variations de pression et un moyen électromagnétique pour déplacer l'injecteur en fonction de la valeur dudit signal.

10. Moteur à combustion interne comportant une chambre de combustion, au moins un injecteur de carburant essentiellement logé dans une culasse à l'exception d'un dépassement NTP et au moins un moyen d'amenée du carburant vers l'injecteur, comportant un système d'adaptation du dépassement de selon l'une quelconque des revendications 1 à 9.

11. Moteur selon la revendication 8, **caractérisé en ce que** ledit moyen d'amenée du carburant comporte une rampe commune haute pression.

12. Procédé de commande d'un moteur selon l'une des revendications 10 à 11, selon lequel le dépassement de l'injecteur est adapté pour être maximum lorsque le moteur fonctionne au ralenti.

13. Procédé de commande d'un moteur selon l'une des revendications 10 à 11, selon lequel le dépassement de l'injecteur est adapté pour être maximum lorsque le moteur fonctionne à bas régime et faible charge, minimum lorsque le moteur fonctionne dans des conditions proches de la courbe de pleine charge et intermédiaire pour les points de fonctionnement intermédiaires.

14. Procédé de commande selon la revendication 12 ou 13, appliqué à la commande d'un moteur auxquels sont associés des moyens de dépollution comportant un Hure devant être périodiquement régénérés, procédé selon lequel le dépassement de est adapté pour être maximum lors des phases de régénération d'un filtre quelques soient les variations de pression dans le moyen d'amenée du carburant pendant ces phase de régénération du filtre.
